# EUROPÄISCHE PATENTSCHRIFT

(11) **EP 0 919 753 B1**
(45) Veröffentlichungstag und Bekanntmachung des Hinweises auf die Patenterteilung: **04.02.2004**
(21) Anmeldenummer: 98121813.4
(22) Anmeldetag: 17.11.1998
(51) Int. Cl.: F16K 31/02

(54) **Ventil**
Valve
Soupape

(30) Priorität: 25.11.1997 DE 19752150
(43) Veröffentlichungstag der Anmeldung: 02.06.1999
(73) Patentinhaber: Focke & Co. (GmbH & Co.), 27283 Verden (DE)
(72) Erfinder: Focke, Heinz, 27283 Verden (DE); Gosebruch, Harald, Dr., 27283 Verden (DE)
(74) Vertreter: Bolte, Erich, Dipl.-Ing.

(56) Entgegenhaltungen:
- DE-A- 19 500 706
- DE-C- 4 325 143
- PATENT ABSTRACTS OF JAPAN vol. 199, no. 602, 29. Februar 1996 (1996-02-29) & JP 07 259690 A (UNISIA JECS CORP), 9. Oktober 1995 (1995-10-09)

## Beschreibung

Die Erfindung betrifft ein Ventil, insbesondere Leimventil, mit einem Aktor aus magnetostriktivem Material zur Betätigung eines Verschlussorgans mit hoher Bewegungsfrequenz und mit einem dem Aktor zugeordneten Magnetfelderzeuger, insbesondere einer Erregerspule, wobei das Verschlussorgan und der Aktor so ausgebildet sind, dass eine Verlängerung des Aktors eine Schließstellung des Ventils bewirkt.

Ventile mit einem magnetostriktiven Aktor sind vor allem vorteilhaft, wenn hochfrequente Öffnungs- und Schließbewegungen des Ventils erforderlich sind. Ein vorteilhafter Anwendungsbereich ist ein Leimventil zum Aufbringen von punktförmigen Leimbildem auf Verpackungen oder Zuschnitte für Verpackungen. Vor allem bei der Herstellung von Zigarettenpackungen sind schnelle Öffnungs- und Schließbewegungen eines Leimventils wegen der hohen Leistung der Verpackungsmaschinen erforderlich.

Die bisher bekannten Ventile mit magnetisch betätigbarem Aktor sind problematisch hinsichtlich eines exakten Verhaltens des Aktors, nämlich einer wirksamen Ausdehnung und Kontraktion.

Aus der DE 195 00 706 ist ein Ventil mit einem piezoelektrischen Aktor bekannt, das zusätzlich einen hydraulischen Wegverstärker aufweist. Um thermische Längenänderungen des Aktors auszugleichen, sind im hydraulischen Wegverstärker Drosselspalte vorgesehen, die so bemessen sind, dass bei thermischen Längenänderungen durch Flüssigkeitsverdrängung über die Drosselspalte eine Verschiebung der Verstärkerkolben des Wegverstärkers bewirkt wird, wodurch der ursprüngliche Stellweg des Aktors unbeeinflusst bleibt.

Die DE 43 25 143 zeigt ein Leimventil, das über einen piezoelektrischen oder magnetostriktiven Aktor betätigt wird. Bei Verlängerung des Aktors öffnet sich das Ventil. Insgesamt sind drei piezoelektrische Elemente vorgesehen, wobei zwei dieser Elemente thermische Längenänderungen des Aktors ausgleichen.

Der Erfindung liegt die Aufgabe zugrunde, Ventile, insbesondere Leimventile, hinsichtlich der Genauigkeit der Längenveränderungen des Aktors zu verbessern.

Zur Lösung dieser Aufgabe ist das erfindungsgemäße Ventil dadurch gekennzeichnet, dass der Aktor mit einem Trägheitskörper verbunden ist, der durch thermisch bedingte Veränderung des Aktors mit hoher Trägheit bewegbar ist.

Während des Betriebs eines Ventils, insbesondere eines Leimventils, auftretende Wärmeschwankungen können die Stellgenauigkeit eines herkömmlichen Aktors beeinträchtigen. Durch die Temperaturschwankungen tritt eine zusätzliche Längenänderung des Aktors auf, die zu einer Überlagerung mit den durch das Magnetfeld erzeugten Längenänderungen führt. Bei dem erfindungsgemäßen Ventil wird der Einfluss der Längenänderung durch Wärme eliminiert, derart, dass sich aus dieser langsamen Längenänderung keine Auswirkungen auf die kurzfristigen, hochfrequenten Stellbewegungen des Aktors ergeben.

Vorteilhafterweise ist der Aktor mit einem bewegbaren Trägheitskörper verbunden, der vorzugsweise aus Metall besteht und eine große Masse aufweist. Bewegungen des Träg-Trägheitskörpers erfolgen nach Maßgabe von Längenänderungen des Aktors aufgrund von Temperatureinflüssen. Die Öffnungs- und Schließbewegungen des Ventils werden hierdurch nicht beeinflußt. Der Trägheitskörper ist vorteilhafterweise gegen elastischen Druck, insbesondere gegen Druckfedem verschiebbar.

Eine andere Besonderheit der Erfindung ist die Betätigung des Aktors durch ein elektrisch erzeugtes Magnetfeld. Dieses bewirkt eine Verlängerung des Aktors und damit eine Bewegung desselben in die Schließstellung des Ventils. Damit in dieser ausgedehnten Stellung des Aktors nicht ständig eine Erregerspule beaufschlagt sein muss, ist erfindungsgemäß dem Aktor ein Dauermagnet zugeordnet, insbesondere ein rohrförmiger Dauermagnet, der den Aktor konzentrisch umgibt. Dieser bewirkt, daß bei erregungsloser Spule der Aktor in Schließstellung und bei Erregung der Spule die Öffnungsstellung bewirkt wird.

Weitere Einzelheiten der Erfindung beziehen sich auf die Anordnung und Betätigung des Aktors wie auf die Ausgestaltung des Leimventils. Ein Ausführungsbeispiel eines Ventils wird nachfolgend anhand der Zeichnungen näher erläutert. Es zeigt:
- Fig. 1: ein (Leim-)Ventil im Vertikalschnitt,
- Fig. 2: einen Horizontalschnitt des Leimventils in der Schnittebene II-II der Fig. 1.

Das in den Zeichnungen dargestellte Ausführungsbeispiel betrifft ein mit hoher Frequenz betätigbares Ventil, insbesondere ein Leimventil zum Einsatz in der Verpackungstechnik. Vor allem bei der Fertigung von Zigarettenpackungen sind punktförmige Leimbilder mit hoher Frequenz auf Zuschnitte bzw. teilweise gefertigte Packungen aufzubringen. Ein in diesem Bereich eingesetztes Leimventil arbeitet beispielsweise mit einer Frequenz von 1.000 Takten je Sekunde.

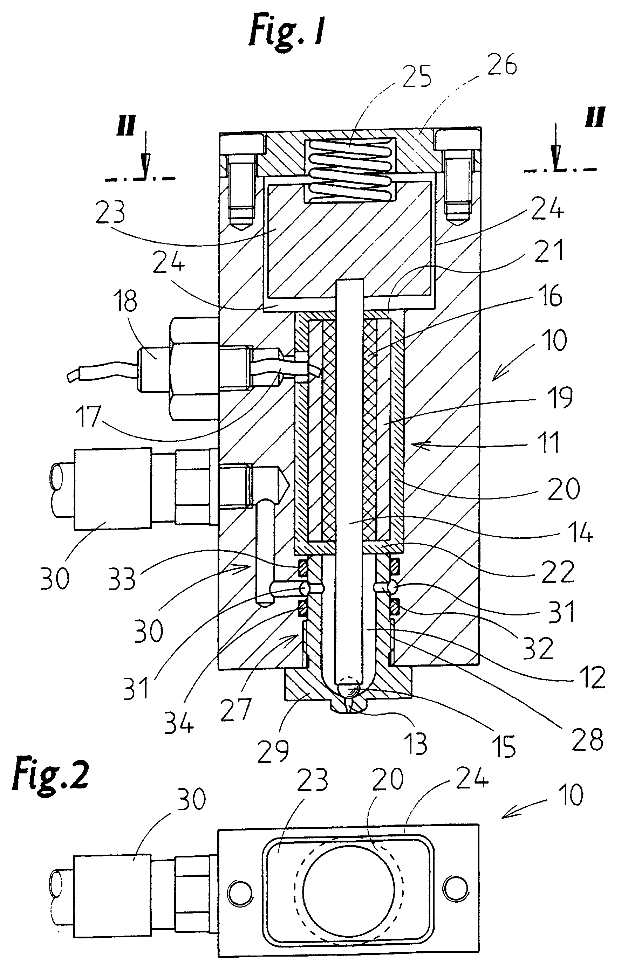

Das Ventil gemäß Fig. 1 besteht aus einem im Querschnitt rechteckigen Gehäuse 10. In diesem ist ein mittiger, sich in Längsrichtung des Gehäuses 10 erstreckender Innenraum 11 gebildet. Dieser geht im unteren Bereich bzw. in einem Endbereich über in eine Ventilkammer 12. Diese wiederum bildet am freien bzw. unteren Ende eine Düsenöffnung bzw. einen (kurzen) Düsenkanal 13. Aus diesem tritt das Medium, also insbesondere Leim, bei geöffnetem Ventil aus.

Der Material- bzw. Leimaustritt aus der Düse wird durch ein mit hoher Frequenz bewegbares Betätigungsorgan gesteuert, nämlich durch einen Aktor 14 aus magnetostriktivem Material. Der langgestreckte, vorzugsweise zylindrische, also stabförmige Aktor 14 erstreckt sich in Längsrichtung des Gehäuses 10. Zum Öffnen des Ventils wird der Aktor 14 zusammengezogen, also hinsichtlich der wirksamen Länge verkürzt. Zum Schließen des Ventils wird der Aktor 14 durch ein auf diesen einwirkendes Magnetfeld ausgedehnt.

Als unmittelbares Verschlußorgan 15 des Ventils ist eine Kugel vorgesehen, die durch den Aktor 14 gegen eine innenseitige Mündung des Düsenkanals 13 gedrückt wird. In diesem Bereich ist eine als Ventilsitz wirkende Fläche gebildet, die der Form des Verschlußorgans 15 entspricht. Das freie Ende des Aktors 14 ist mit einer muldenförmigen Vertiefung versehen, in der das kugelförmige Verschlußorgan 15 ruht.

Zur Erzeugung eines wechselnden, taktweise erzeugten Magnetfeldes ist der Aktor 14 von einer Spule 16 umgeben. Zwischen Aktor 14 und Spule 16 ist eine neutrale Zwischenschicht angeordnet, beispielsweise aus Papier. Die Spule 16 ist um den Aktor 14 gewickelt. Zu der Spule 16 führt eine elektrische Leitung 17. Diese schließt über einen Stecker 18 mit Verschraubung an das Gehäuse 10 an.

Eine Besonderheit besteht darin, daß dem Aktor ein weiterer, zweiter Magnet zugeordnet ist, und zwar ein Dauermagnet 19. Dieser ist als hülsenförmiges Gebilde gestaltet und umgibt den Aktor 14 bzw. die Spule 16 konzentrisch. Der Dauermagnet 19 erzeugt ein permanentes Magnetfeld, welches zu einer Ausdehnung des Aktors 14 führt und damit zu einer Schließstellung des Ventils entsprechend der Darstellung in Fig. 1. Wenn demnach nur der Dauermagnet 19 wirksam ist, befindet sich das Ventil in Schließstellung. Durch Erregung der Spule 16 wird die Wirkung des Dauermagneten 19 aufgehoben bzw. kompensiert, so daß faktisch kein Magnetfeld auf den Aktor wirkt. Dieser zieht sich zusammen auf die Normalgröße. Durch die dadurch gegebene Verkürzung des Aktors 14 wird das Ventil in eine Öffnungsstellung bewegt, das Verschlußorgan 15 demnach von der Düsenöffnung bzw. dem Düsenkanal 13 zurückgezogen. Auf diese Weise wird erreicht, daß durch taktweises, pulsierendes Erregen der Spule 16 ein Öffnen des Ventils bewirkt und bei fehlender Stromzufuhr das Ventil durch den Dauermagneten 19 geschlossen oder in Schließstellung gehalten wird. Dauermagnet 19 und Spule 16 haben hier eine übereinstimmende Abmessung in Längsrichtung.

Die aus Aktor 14, Spule 16 und Dauermagnet 19 gebildete Einheit ist umhüllt, und zwar im Bereich von Spule 16 und Dauermagnet 19. Eine zylindrische Umhüllung 20 aus isolierendem, gießbarem Werkstoff umhüllt den Dauermagneten 19 auf voller Länge und schließt mit Stirnwänden 21, 22 an den Aktor 14 dichtend an. Die Umhüllung 20 besteht aus einem dauerelastischen, isolierenden Werkstoff, der im Ausgangszustand gießfähig ist und so in die gezeigte Form der Umhüllung 20 gebracht werden kann. Insbesondere ist eine silikonartige Masse als Umhüllung 20 geeignet.

Wichtig ist die besondere Lagerung bzw. Halterung des Aktors 14, derart, daß temperaturbedingte Längenänderungen des Aktors ohne Wirkung auf die magnetische Betätigung bleiben. Längenänderungen aufgrund von Temperaturschwankungen finden innerhalb längerer Zeiträume statt. Der Aktor 14 ist deshalb so gelagert bzw. gehalten, daß die während einer längeren Zeitdauer stattfindende temperaturbedingte Längenänderung stattfinden kann, gleichwohl aber bei den hochfrequenten, magnetisch bewirkten Längenänderungen ausreichend abgestützt ist.

Das vom Verschlußorgan 15 abliegende (obere) Ende des Aktors ist zu diesem Zweck in einem großvolumigen bzw. eine große Masse bildenden Halteklotz 23 gelagert. Der Aktor 14 tritt mit dem Ende in eine Ausnehmung des Halteklotzes 23 ein und ist in diesem verankert, zum Beispiel durch Klebung. Der Halteklotz 23 sitzt in einer Vertiefung 24 des Gehäuses 10 und ist in dieser Vertiefung 24 frei bewegbar. Der Halteklotz 23 bildet während der hochfrequenten Öffnungs- und Schließbewegungen des Aktors eine feste, unbewegliche Abstützung für diesen. Der Aktor 14 kann aufgrund der Magnetfelder so bewegt werden, daß eine dichte Schließstellung im Bereich des Düsenkanals 13 gegeben ist. Der Halteklotz 23 bildet dabei trotz grundsätzlicher Bewegbarkeit eine feste Abstützung.

Wenn hingegen Längenänderungen über einen größeren Zeitraum ablaufen, also beispielsweise bei Temperatureinwirkungen, wird der Halteklotz 23 durch den sich langsam ausdehnenden oder zusammenziehenden Aktor 14 verschoben. Gleichwohl bleibt der Effekt der Abstützung für den Aktor 14 erhalten.

Der Halteklotz ist gegen elastischen Widerstand bei einer Verlängerung des Aktors 14 verschiebbar. Bei dem vorliegenden Ausführungsbeispiel ist eine mittig angeordnete Druckfeder 25 vorgesehen, die sich einerseits in einer Ausnehmung des Halteklotzes 23 abstützt und andererseits in einer Ausnehmung einer oberen Verschlußplatte 26 des Gehäuses 10. Die Verschlußplatte 26 ist abnehmbar - mittels Schrauben - und ermöglicht den Zugang zum Inneren des Ventils bzw. des Gehäuses 10.

Auch im Bereich der Düsenmündung bzw. des Düsenkanals 13 ist das Ventil in besonderer Weise ausgebildet. Ein Düseneinsatz 27 ist mittels Schraubverbindung 28 in das Gehäuse 10 eingesetzt. Der Düseneinsatz 27 ragt mit einem Kopf 29 aus dem Gehäuse 10 heraus. Der Düsenkanal 13 befindet sich im Bereich des Kopfes 29. Der Düseneinsatz bildet die Ventilkammer 12, die bis zu den Magneten 16, 19 bzw. bis zur Umhüllung 20 führt.

Ein Leimkanal 30 für die Zuführung des Leims zur Ventilkammer 12 verläuft winkelförmig im Gehäuse 10 und mündet in einem Ringkanal 31 desselben. Dieser läuft um den Düseneinsatz 27 herum. Radialgerichtete Bohrungen 32 führen vom Ringkanal 31 in Radialrichtung in die Ventilkammer 12. Mehrere Bohrungen 32 sind längs des Umfangs verteilt angeordnet.

Oberhalb und unterhalb des Ringkanals 31 sind Abdichtungen vorgesehen, nämlich O-Ringe 33, 34. Dadurch wird Leimaustritt in dem Bereich zwischen Düseneinsatz 27 und Gehäuse 10 vermieden.

Der Halteklotz 23 kann in der Vertiefung 24 begrenzte Bewegungen ausführen. Wenn der Kopf 29 vom Ventilgehäuse 10 entfernt wird, bleibt der Aktor 14 innerhalb des Gehäuses 10. Der Halteklotz 23 kommt an der Begrenzung der Vertiefung 24 zur Anlage. Auch die aus Spule 16, Dauermagnet 19 und Umhüllung 20 gebildete Einheit bleibt wegen des geringeren Querschnitts des Innenraums 11 im Bereich des Kopfes 29 in der gezeigten Position. Die Montage der genannten Einheiten erfolgt über den durch die Verschlußplatte 26 freilegbaren Zugang zum Inneren des Gehäuses 10.

Anstelle des Halteklotzes 23 kann eine träge bewegbare Masse als Halterung für den Aktor auch an einer anderen Stelle angeordnet sein. Insbesondere kann eine zylindrische Hülse als träge Masse vorgesehen sein, die den Aktor 14 konzentrisch umgibt und mit dem freien Ende desselben verbunden ist.

Das Ventil kann auch so gestaltet sein, daß der Dauermagnet 19 zugleich die Funktion der träge bewegbaren Halterung für den Aktor 14 übernimmt. Auch kann der Dauermagnet in der Funktion als träge Masse am freien Ende des Aktors positioniert sein.

Die Unabhängigkeit der hochfrequenten Stellbewegungen des Aktors 14 von Temperaturschwankungen kann auch auf andere Weise erzielt werden als durch den Halteklotz 23. Beispielsweise kann der Aktor mit einem Kolben verbunden sein, der bei langsamen Dehnungen ein Medium über einen engen Kanal bzw. mit großem Widerstand von einer Kammer in eine andere preßt.

### Bezugszeichenliste:

- 10: Gehäuse
- 11: Innenraum
- 12: Ventilkammer
- 13: Düsenkanal
- 14: Aktor
- 15: Verschlußorgan
- 16: Spule
- 17: Leitung
- 18: Stecker
- 19: Dauermagnet
- 20: Umhüllung
- 21: Stirnwand
- 22: Stirnwand
- 23: Halteklotz
- 24: Vertiefung
- 25: Druckfeder
- 26: Verschlußplatte
- 27: Düseneinsatz
- 28: Schraubverbindung
- 29: Kopf
- 30: Leimkanal
- 31: Ringkanal
- 32: Bohrung
- 33: O-Ring
- 34: O-Ring

## Patentansprüche

1. Ventil, insbesondere Leimventil, mit einem Aktor (14) aus magnetostriktivem Material zur Betätigung eines Verschlussorgans (15) mit hoher Bewegungsfrequenz und mit einem dem Aktor zugeordneten Magnetfelderzeuger, insbesondere einer Spule (16), wobei das Verschlussorgan (15) und der Aktor (14) so ausgebildet sind, dass eine Verlängerung des Aktors (14) eine Schließstellung des Ventils bewirkt, **dadurch gekennzeichnet, dass** der Aktor (14) mit einem Trägheitskörper (23) verbunden ist, der durch thermisch bedingte Veränderung des Aktors (14) mit hoher Trägheit bewegbar ist

2. Ventil nach Anspruch 1, **dadurch gekennzeichnet, daß** der Aktor (14) mit einem bewegbaren Trägheitskörper verbunden ist, insbesondere einem Halteklotz (23) mit verhältnismäßig großer Masse, wobei der Trägheitskörper bzw. der Halteklotz (23) ausschließlich bei thermisch bedingten Längenänderungen des Aktors (14) bewegbar ist.

3. Ventil nach Anspruch 1 oder 2, **dadurch gekennzeichnet, daß** das vom Verschlußorgan (15) abgekehrte Ende des langgestreckten Aktors (14) mit dem Trägheitskörper bzw. dem Halteklotz (23) verbunden ist, insbesondere durch Klebung.

4. Ventil nach Anspruch 1 oder einem der weiteren Ansprüche, **dadurch gekennzeichnet, daß** die Halterung für den Aktor (14), insbesondere der Halteklotz (23), gegen elastischen Druck bei Längenänderungen des Aktors (14) bewegbar ist, insbesondere gegen eine Druckfeder (25).

5. Ventil nach Anspruch 1 oder einem der weiteren Ansprüche, **dadurch gekennzeichnet, daß** dem Aktor (14) eine Spule (16) zur Erzeugung eines pulsierenden Magnetfeldes und ein Dauermagnet (19) zur Erzeugung eines permanenten Magnetfeldes zugeordnet ist, derart, daß der Aktor bei Erregung der Spule (16) das Verschlußorgan (15) in Öffnungsstellung der Düse bewegt.

6. Ventil nach Anspruch 5 oder einem der weiteren Ansprüche, **dadurch gekennzeichnet, daß** Spule (16) und Dauermagnet (19) den Aktor (14) auf einem Teilbereich der Länge konzentrisch umgeben, wobei insbesondere die Spule (16) den Aktor (14) unmittelbar und der Dauermagnet (19) als zylindrische Hülse die Spule (16) umgibt.

7. Ventil nach Anspruch 1 oder einem der weiteren Ansprüche, **dadurch gekennzeichnet, daß** die Spule (16) zur Erzeugung eines pulsierenden Magnetfeldes und/oder der Dauermagnet (19) zur Bildung einer dichten, geschlossenen Einheit von einer Umhüllung (20) umgeben sind, die dicht mit dem Aktor (14) verbunden ist und aus einem neutralen, elastischen Werkstoff besteht.

8. Ventil nach Anspruch 1 oder einem der weiteren Ansprüche, **dadurch gekennzeichnet, daß** ein Kopf (29) als Einsatzstück in ein Gehäuse (10) eingesetzt ist und im Inneren eine Ventilkammer (12) mit Düsenöffnung bzw. Düsenkanal (13) bildet, wobei ein Leimkanal (30) in der Ventilkammer (12) mündet, vorzugsweise über einen Ringkanal (31) mit radialgerichteten Bohrungen (32).

## Claims

1. Valve, in particular a glue valve, having an actuator (14) made from magnetostrictive material for actuating a closure member (15) at high-frequency, and having a magnetic field generator, in particular a coil (16), assigned to the actuator, the closure member (15) and the actuator (14) being designed such that a lengthening of the actuator (14) effects a closed position of the valve, **characterized in that** the actuator (14) is connected to an inertial body (23) which can be moved with high inertia as a result of thermally induced change in the actuator (14).

2. Valve according to Claim 1, **characterized in that** the actuator (14) is connected to a movable inertial body, in particular a holding block (23) of relatively large mass, the inertial body or the holding block (23) being movable only in the case of thermally induced changes in length of the actuator (14).

3. Valve according to Claim 1 or 2, **characterized in that** the end of the elongated actuator (14) averted from the closure member (15) is connected to the inertial body or the holding block (23) in particular by adhesive bonding.

4. Valve according to Claim 1 or one of the other claims, **characterized in that** the holder for the actuator (14), in particular the holding block (23), can be moved against elastic pressure, in particular against a compression spring (25), in the case of changes in length of the actuator (14).

5. Valve according to Claim 1 or one of the other claims, **characterized in that** the actuator (14) is assigned a coil (16) for generating a pulsing magnetic field, and a permanent magnet (19) for generating a permanent magnetic field, in such a way that given excitation of the coil (16) the actuator moves the closure member (15) into the open position of the nozzle.

6. Valve according to Claim 5 or one of the other claims, **characterized in that** the coil (16) and permanent magnet (19) concentrically surround the actuator (14) on a fraction of the length, it particularly being the case that the coil (16) directly surrounds the actuator (14), and the permanent magnet (19) surrounds the coil (16) as a cylindrical sleeve.

7. Valve according to Claim 1 or one of the other claims, **characterized in that**, for the purpose of forming an impervious, closed unit the coil (16) for generating a pulsating magnetic field and/or the permanent magnet (19) are surrounded by a sheath (20) which is connected to the actuator (14) and consists of a neutral, elastic material.

8. Valve according to Claim 1 or one of the other claims, **characterized in that** a head (29) is introduced as an insert into a housing (10) and forms in the interior a valve chamber (12) with a nozzle opening and/or nozzle duct (13), a glue duct (30) opening in the valve chamber (12), preferably via an annular duct (31) with radially directed bores (32).

## Revendications

1. Vanne, en particulier vanne à colle, comportant un actionneur (14) en matière magnétostrictive pour l'actionnement d'un organe d'obturation (15) avec une fréquence élevée de mouvement, et un générateur de champ magnétique, en particulier une bobine (16), associé à l'actionneur, l'organe d'obturation (15) et l'actionneur (14) étant faits de façon qu'un allongement de l'actionneur (14) produise une position fermée de la vanne, **caractérisée par le fait que** l'actionneur (14) est joint à un corps inertiel (23) qui est mobile avec une grande inertie par modification d'origine thermique de l'actionneur (14).

2. Vanne selon la revendication 1, **caractérisée par le fait que** l'actionneur (14) est joint à un corps inertiel mobile, en particulier à un bloc de maintien (23) de masse relativement grande, le corps inertiel ou le bloc de maintien (23) étant mobile uniquement en cas de changements de longueur d'origine thermique de l'actionneur (14).

3. Vanne selon l'une des revendications 1 et 2, **caractérisée par le fait que** l'extrémité de l'actionneur allongé (14) opposée à l'organe d'obturation (15) est jointe, en particulier par collage, au corps inertiel ou au bloc de maintien (23).

4. Vanne selon la revendication 1 ou une des autres revendications, **caractérisée par le fait que** le support de l'actionneur (14), en particulier le bloc de maintien (23), est mobile contre une pression élastique, en particulier contre une force élastique (25), lors des changements de longueur de l'actionneur (14).

5. Vanne selon la revendication 1 ou une des autres revendications, **caractérisée par le fait qu'**à l'actionneur (14) sont associés une bobine (16) pour la production d'un champ magnétique pulsé et un aimant permanent (19) pour la production d'un champ magnétique permanent, de façon telle que l'actionneur, en cas d'excitation de la bobine (16), déplace l'organe d'obturation (15) pour mettre la buse en position ouverte.

6. Vanne selon la revendication 5 ou une des autres revendications, **caractérisée par le fait que** la bobine (16) et l'aimant permanent (19) entourent l'actionneur (14) concentriquement sur une partie de sa longueur, et en particulier, la bobine (16) entoure directement l'actionneur (14) et l'aimant permanent (19) entoure la bobine (16) sous forme de manchon cylindrique.

7. Vanne selon la revendication 1 ou une des autres revendications, **caractérisée par le fait que** la bobine (16) pour la production d'un champ magnétique pulsé et/ou l'aimant permanent (19) sont, pour la formation d'un ensemble fermé étanche, entourés par une enveloppe (20) qui est jointe de manière étanche à l'actionneur (14) et constituée d'un matériau élastique neutre.

8. Vanne selon la revendication 1 ou une des autres revendications, **caractérisée par le fait qu'**une tête (29) est engagée comme pièce rapportée dans une boîte (10) et forme à l'intérieur une chambre de vanne (12) avec orifice de buse ou canal de buse (13), et un canal à colle (30) débouche dans la chambre de vanne (12), de préférence par un canal circulaire (31) pourvu de trous dirigés radialement (32).
